# EUROPÄISCHE PATENTSCHRIFT

(11) **EP 1 034 974 B1**
(45) Veröffentlichungstag und Bekanntmachung des Hinweises auf die Patenterteilung: **13.10.2004**
(21) Anmeldenummer: 00101154.3
(22) Anmeldetag: 21.01.2000
(51) Int. Cl.: B60N 2/20

(54) **Fahrzeugsitz**
Vehicle seat
Siège de véhicule

(30) Priorität: 08.03.1999 DE 19910085
(43) Veröffentlichungstag der Anmeldung: 13.09.2000
(73) Patentinhaber: DaimlerChrysler AG, 70567 Stuttgart (DE)
(72) Erfinder: Schmidt, Bernd, 72218 Wildberg (DE); Schrom, Ralf-Henning, 72108 Rottenburg (DE); Shephard, Philip C., Birmingham B28 OQR (GB); Velimvassakis, Petros, 76227 Karlsruhe (DE)

(56) Entgegenhaltungen:
- DE-A- 19 725 365
- US-A- 5 507 561

## Beschreibung

Die Erfindung betrifft einen Fahrzeugsitz mit einer zum Erleichtern des Ein- und Ausstiegs in eine Ausweichstellung vorklappbaren Rückenlehne nach dem Oberbegriff des Patentanspruchs 1.

Eine solcher, aus der DE 25 14 819 A1 bekannter Fahrzeugsitz weist in einem Abstand hinter der Schwenkachse beidseitig am Sitzkissenteil einen Haltebolzen auf, der bei zurückgeklappter Rückenlehne von einem zugeordneten Verriegelungshaken hintergriffen ist, wobei der Verriegelungshaken am zugehörigen Stützbeschlag angelenkt und über eine Ver- und Entriegelungsmechanik bewegungsgesteuert ist. Da für die Ver- und Entriegelungsmechanik ein erheblicher Anordnungsbauraum benötigt wird, sind die Stützbeschläge entsprechend großformatig gestaltet. Dies kann wegen des damit verbundenen hohen Gewichts der Stützbeschläge und wegen der damit einhergehenden, ggf. den Sitzkomfort beeinträchtigenden hohen Anordnung des Drehgelenks unerwünscht sein. Ein weiterer, ähnlicher Fahrzeugsit ist aus der US 5 507 561 A bekannt.

Aufgabe der Erfindung ist es, einen Fahrzeugsitz mit einer zum Erleichtern des Ein- und Ausstiegs in eine Ausweichstellung vorklappbaren Rückenlehne gemäß dem Oberbegriff des Patentanspruchs 1 dahingehend weiterzuentwickeln, daß dessen Stützbeschläge bei zuverlässiger Stützfunktion günstiger dimensioniert werden können.

Diese Aufgabe wird erfindungsgemäß durch einen Fahrzeugsitz mit den Merkmalen des Patentanspruchs 1 gelöst.

Vorteilhafte Ausführungsformen des erfindungsgemäßen Fahrzeugsitzes mit zweckmäßigen Weiterbildungen der Erfindung sind in den Unteransprüchen angegeben.

Da der Fahrzeugsitz an nach hinten auskragenden, freien Schenkelenden seiner Halteschenkel verriegelt wird, kann das Drehgelenk der Rückenlehne problemloser in einer tieferen Position gegenüber den Stützpunkten der Stützbeschläge versetzt angeordnet werden.

Außerdem lassen sich die freien Schenkelenden als bolzenartige Verriegelungsmittel ausbilden, wodurch die beweglichen Teile der Verriegelung in vorteilhafter Weise am Sitzkissenteil angeordnet werden können. Hierdurch ergeben sich bei verriegelter Rückenlehne günstigere Hebelverhältnisse an den Stützbeschlägen und damit eine verbesserte Eignung für Integralsitze, bei denen auch die insbesondere bei Frontalkollisionen des Fahrzeugs auftretenden Gurtkräfte von der Rückenlehne bzw. von den Stützbeschlägen aufgenommen werden müssen.

Eine besonders günstige Verteilung der über die Rückenlehne auf die Stützbeschläge ausgeübten Kräfte ergibt sich, wenn die jeweilige Stützstelle im Bereich des Haltearms in einem Abstand hinter dem Drehgelenk liegt.

Besonders wirkungsvoll und sicher lassen sich die Schenkelenden mittels U-förmiger Bügel verriegeln, die am Sitzrahmen des Sitzkissenteils drehbar gelagert sind. Es versteht sich, daß damit auch das Schenkelende des zugeordneten Haltearms unter Anpassung an den größeren lichten Bügelquerschnitt verdickt sein kann.

Um bei einem Integralsitz auf einfache Weise eine Anpassung der Drehriegelfestigkeit an die bei Kollisionen unterschiedlichen Belastungen auf die seitlich angeordneten Stützbeschläge des Sitzes zu ermöglichen, ist der U-förmige Bügel auf der Seite des Gurtverankerungspunktes breiter ausgebildet als auf der gegenüberliegenden Seite.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in
- Fig. 1: eine Seitenansicht auf einen Sitzrahmen eines Fahrzeugsitzes mit einer Rückenlehne, die in eine Ausweichstellung vorklappbar ist;
- Fig.2a,b: jeweils schematische Ansichten auf einen Lehnenrahmen der Rückenlehne, der über seitliche Stützbeschläge verschwenkbar am Sitzrahmen des Sitzkissenteils angeordnet ist;
- Fig.3: eine schematische, perspektivische Ansicht auf zwei Verriegelungsmittel zur Verriegelung der Rückenlehne in der zurückgeklappten Endlage, wobei die beiden Drehriegel über eine Verbindungsstange miteinander drehgekoppelt und an dem Sitzrahmen befestigt sind;
- Fig.4a,b,c: jeweils eine schematische bzw. eine perspektivische (Fig.4c) Seitenansicht auf Bauteile einer Steuerungsmechanik zum Sichern und Entsichern der Drehriegel in der verriegelten Stellung;
- Fig.5a,b: eine schematische Ansicht eines der Stützbeschläge mit der Steuerungsmechanik sowie eine vergrößerte schematische Ansicht einer Sicherungsmechanik der Steuerungsmechanik bei zurückgeklappter Rückenlehne;
- Fig.6a,b: eine schematische Ansicht eines der Stützbeschläge mit der Steuerungsmechanik sowie eine vergrößerte schematische Ansicht der Sicherungsmechanik bei vorgeklappter Rückenlehne.

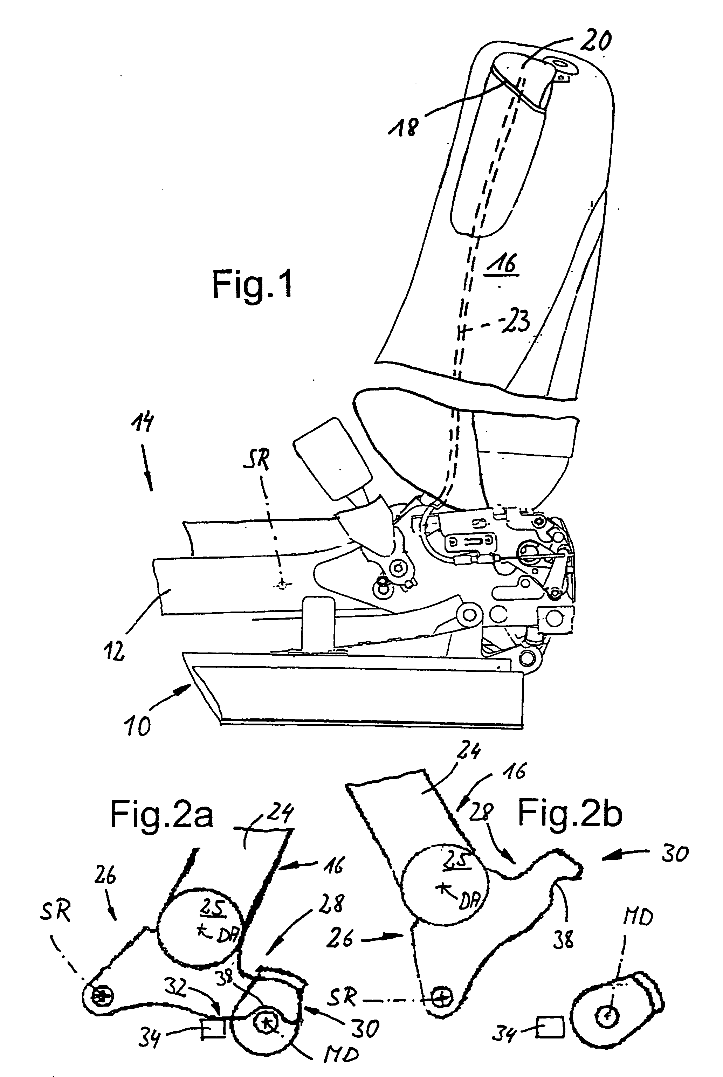

In Fig.1 ist in Seitenansicht ein als Integralsitz mit in tegriertem Sicherheitsgurtsystem ausgebildeter, längsverstellbarer Fahrzeugsitz dargestellt, der einen über einem Sitzuntergestell 10 höhenverstellbar angeordneten Sitzrahmen 12 eines schematisch angedeuteten Sitzkissenteils 14 umfaßt. An dem Sitzrahmen 12 des Sitzkissenteils 14 ist eine Rückenlehne 16 angeordnet, die zum Erleichtern des Ein- und Ausstiegs um eine ihr gegenüber nach vorne versetzt angeordnete Schwenkachse SR in eine Ausweichstellung vorklappbar ist, wobei beim Vorklappen der Rückenlehne 16 gleichzeitig ein nicht dargestellter Antriebsmotor einer Längsverstelleinrichtung über einen Mikroschalter aktiviert und der Fahrzeugsitz motorisch nach vorne verfahren wird. Im oberen Seitenbereich der Rückenlehne 16 ist ein oberer Gurtverankerungspunkt 18 befestigt, durch den der Sicherheitsgurt aus dem Inneren des Fahrzeugsitzes austritt. Oberhalb des Gurtverankerungspunktes 18 ist ein Betätigungselement 20 angeordnet, mit dem im weiteren noch beschriebene Verriegelungsmittel 22 (Fig.2a,2b) über einen Bowdenzug 23 synchron fernentriegelbar sind, wonach die Rückenlehne 16 aus der zurückgeklappten in die vorgeklappte Ausweichstellung bringbar ist.

In den Fig.2a und 2b ist jeweils in schematischer Ansicht ein Lehnenrahmen 24 der Rückenlehne 16 dargestellt, der mit seinen zwei Stützbeschlägen 26 um die Schwenkachse SR verschwenkbar ist, wobei die beiden Stützbeschläge 26 im seitlichen unteren Bereich der Rückenlehne 16 innenseitig am Sitzrahmen 12 (Fig.1) des Sitzkissenteils 14 gelagert sind. In Fig.2a ist der Lehnenrahmen 24 mit den Stützbeschlägen 26 in der zurückgeklappten Endlage und in Fig.2b in der nach vorne geklappten Ausweichstellung dargestellt. An den beiden Stützbeschlägen 26 ist im Abstand hinter der vorderen Schwenkachse SR des Rückenlehne 16 jeweils ein Drehgelenk 25 angeordnet, um dessen Drehgelenkachse DA der Lehnenrahmen 24 verschwenkt und damit die Neigung der Rückenlehne 16 eingestellt werden kann. Die Stützbeschläge 26 weisen jeweils einen nach hinten abragenden Halteschenkel 28 auf, der in einem Abstand hinter dem zugeordneten Drehgelenk 25 der Rückenlehne 16 endet. Die Halteschenkel 28 weisen jeweils ein freies Schenkelende 30 auf, das in der zurückgeklappten Endlage der Rückenlehne 16 durch die über das Betätigungselement 20 fernenttriegelbaren Verriegelungsmittel 22 am Sitzrahmen 12 des Sitzkissenteils 14 verriegelt festgelegt sind. In der zurückgeklappten Endlage stützten sich die Stützbeschläge 26 mit Stützstellen 32 an Amboßteilen 34 ab, die am Sitzrahmen 12 des Sitzkissenteils 14 angeordnet sind. Die Stützstellen 32 befinden sich vorzugsweise in einem Abstand hinter dem Drehgelenk 25 der Rückenlehne 16. Die Verbindungslinien zwischen der Schwenkachse SR, dem freien Schenkelende 30 und der Drehgelenkachse DA des jeweiligen Stützbeschlages 26 bilden dabei vorzugsweise ein etwa gleichschenkliges Dreieck.

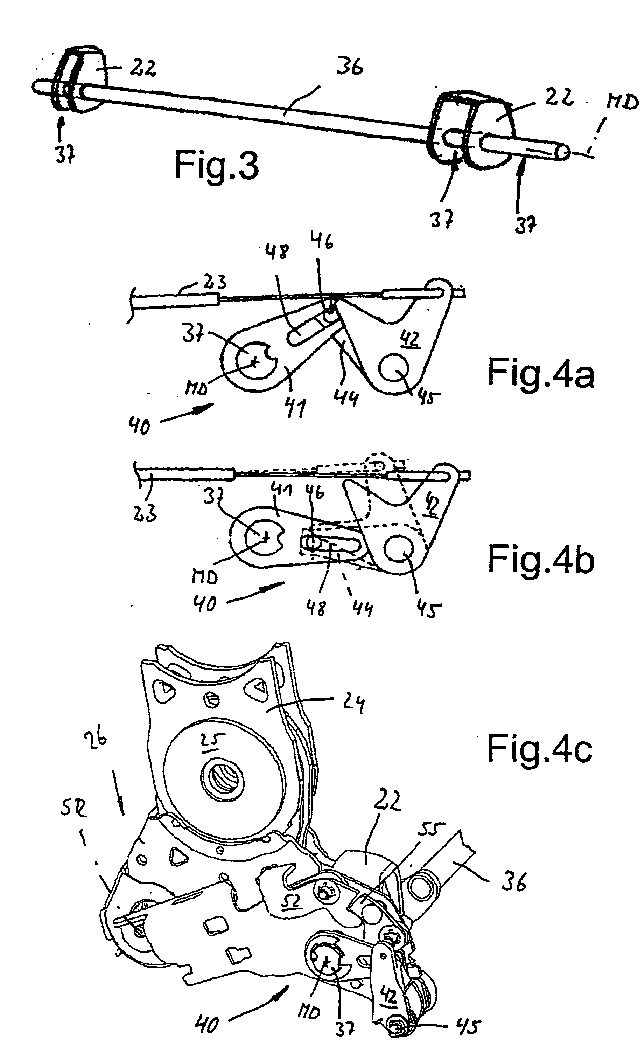

Die Verriegelungsmittel 22 sind - wie in Zusammenschau mit Fig.3 erkennbar - als etwa U-bügelförmige Drehriegel ausgebildet, die über eine Verbindungsstange 36 miteinander drehgekoppelt sind, wobei die Drehriegel 22 um die Mittelachse MD der Verbindungsstange 36 verschwenkbar sind, und wobei die Verbindungsstange 36 drehbar an dem Sitzrahmen 12 des Sitzkissenteils 14 gelagert ist. In dem in Fig.3 gezeigten Ausführungsbeispiel bildet die Verbindungsstange 36 auch die Riegelachse 37 des jeweiligen Drehriegels 22. Gleichfalls wäre es jedoch auch denkbar, daß die Verbindungsstange 36 konzentrisch zu der jeweiligen Riegelachse 37 verläuft, wobei dann das gesamte Verriegelungselement mit den Drehriegeln 22 mit deren Riegelachsen 37 und der zwischen den Drehriegel 22 angeordneten Verbindungsstange 36 über die Riegelachse 37 drehbar an dem Sitzrahmen 12 gelagert ist. In Fig.3 ist weiterhin erkennbar, daß der Drehriegel 22 auf der Seite des Gurtverankerungspunktes 18 verstärkt ausgebildet ist, da bei einem Integralsitz auf den Stützbeschlag 26 auf dieser Seite z.B. bei einem Unfall eine besonders hohe Kraft wirkt.

In der in Fig.2a gezeigten Verriegelungsstellung der Drehriegel 22 umgreifen diese das Schenkelende 30 des zugeordneten Halteschenkels 28, wodurch der jeweils zugeordnete Stützbeschlag 26 vorne an der Schwenkachse SR und hinten über den Drehriegel 22 am Sitzrahmen 12 festgelegt ist. Zum Entriegeln der Schenkelenden 30 werden die Drehriegel 22 - wie in Fig.2b ersichtlich - um die Achse MD im Uhrzeigersinn nach hinten gedreht; demgemäß werden sie zum Verriegeln der Schenkelenden 30 gegen den Uhrzeigersinn nach vorne bewegt. Die Schenkelenden 30 der Halteschenkel 28 weisen im Bereich der Riegelachse 37 bzw. der Verbindungsstange 36 eine Einbuchtung 38 auf. Dabei wäre es auch denkbar, daß sich die Stützstellen 32 der Stützbeschläge 26 im Bereich der Einbuchtungen 38 an den Riegelachsen 37 bzw. an der Verbindungsstange 36 abstützen; in diesem Fall müßten keine Amboßteile 34 zum Abstützen der Stützbeschläge 26 am Sitzrahmen 12 vorgesehen werden.

In den Fig.4a, 4b sind in schematischer und in Fig.4c sind in perspektivischer Seitenansicht Bauteile einer Steuerungsmechanik 40 erkennbar, die dem Sichern und Entsichern der Drehriegel 22 in der verriegelten Stellung dienen. Die Steuerungsmechanik 40 umfaßt einen drehbar gelagerten Kulissenarm 41, der - wie insbesondere in Fig.4c ersichtlich - an einem der Enden der Riegelachse 37 drehfest angeordnet ist. In einem Abstand von der Riegelachse 37 sind ein etwa V-förmiger Zughebel 42 und ein Hebelarm 44 hintereinander angeordnet und um eine Hebelachse 45 drehbar gelagert, wobei von dem Hebelarm 44 ein Kulissenstift 46 absteht, der in ein Langloch 48 des Kulissenarms 41 eingreift. Der V-förmige Zughebel 42 und der Hebelarm 44 sind nicht miteinander drehfest verbunden. Der Bowdenzug 23 ist am hinteren Arm des V-förmigen Zughebels 42 befestigt.

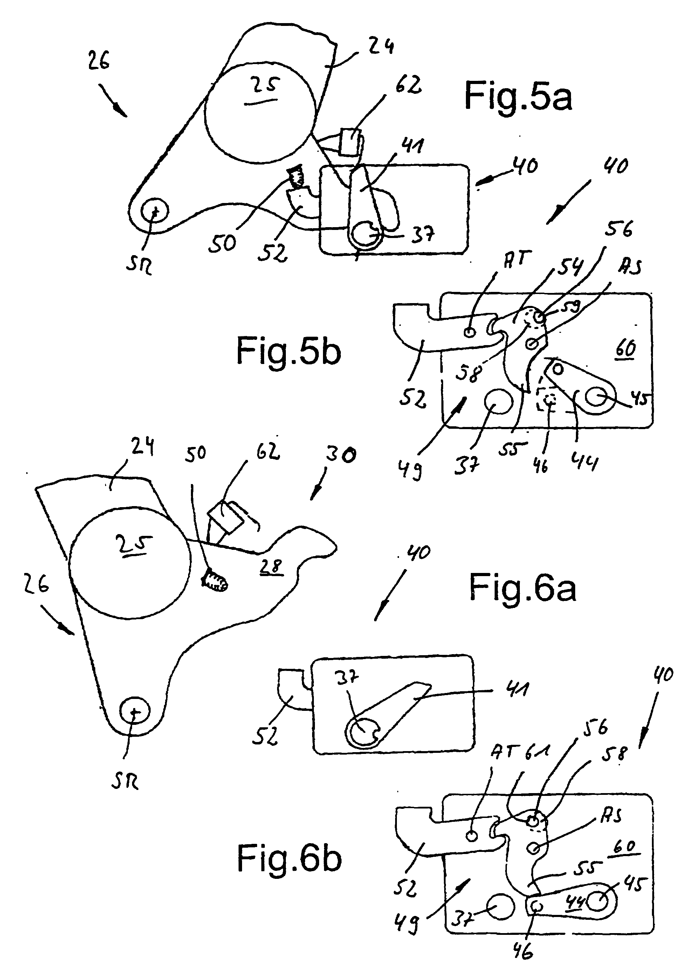

Wird nun der Zughebel 42 über den Bowdenzug 23 durch das Betätigungselement 20 angesteuert und gegen die Federkraft einer nicht gezeigten Spiralfeder gegen den Uhrzeigersinn verdreht, so führt der Zughebel 42 durch seinen vorderen Arm bei seiner Schwenkbewegung nach vorne den Kulissenstift 46 mit, wodurch der Hebelarm 44 und der Zughebel 42 miteinander aus der in Fig.4a gezeigten in die Stellung in Fig.4b verdreht werden. Durch den in dem Langloch 48 geführten Kulissenstift 46 wird der Kulissenarm 41 mit dem Uhrzeigersinn verdreht. Die mit dem Kulissenarm 41 über die Riegelachse 37 bzw. Verbindungsstange 36 drehfest verbundenen Drehriegel 22 werden ebenfalls in Richtung mit dem Uhrzeigersinn verdreht, wodurch die beiden freien Schenkelenden 30 (Fig.2b) zum Vorklappen der Rückenlehne 16 freigegeben werden. Der Hebelarm 44 wird gegebenenfalls in der in Fig.4b dargestellten unteren Stellung durch eine Sicherungsmechanik 49 (Fig.5a,5b,6a,6b) gehalten, die im weiteren unter Bezugnahme der Fig.5a,b und 6a,b noch erläutert werden wird. Somit verbleibt der Hebelarm 44 beim Loslassen des Betätigungselements 20 und dem damit verbundenen Zurückschwenken des Zughebels 42 in Richtung mit dem Uhrzeigersinn an seinem Ort; das gleich gilt für den mit dem Hebelarm 44 bewegungsgekoppelten Kulissenarm 41 mit den Drehriegeln 22.

Seitlich an dem in Fig.5a in seiner zurückgeklappten Endlage dargestellt Stützbeschlag 26 ist ein Federstift 50 angeordnet, der sich in dieser Stellung der Rückenlehne 16 auf einem um eine Achse AT schwenkbaren Tasthebel 52 der Sicherungsmechanik 49 abstützt. Dieser Tasthebel 52 steht gemäß Fig.5b mit einem Sicherungshebel 54 klauenartig in Eingriff, der um eine Achse AS verschwenkbar ist und einen seitlich abstehenden Stift 56 aufweist, der innerhalb einer größeren Bohrung 58 in einem Gehäuse 60 der Steuermechanik 40 angeordnet und in seiner durch den Tasthebel 52 beeinflußten Bewegung begrenzt ist. In der in den Fig.5a und 5b gezeigten Stellung des Stützbeschlags 26 bei zurückgeklappter Rückenlehne 16 ist somit der Sicherungshebel 54 durch den Tasthebel 52 in eine im Uhrzeigersinn soweit verschwenkte Stellung gebracht, bis der Stift 56 am hinteren Bereich 59 der Bohrung 58 anliegt; entsprechend of ist eine Sicherungsnase 55 des Sicherungshebels 54 im Uhrzeigersinn nach vorne verschwenkt.

Entsprechend ist in Fig.6a und 6b die Sicherungsmechanik 49 bei vorgeklappten Stützbeschlägen 26 dargestellt, wobei dann der Tasthebel 52 nicht durch den Federstift 50 belastet ist und im Ergebnis der Sicherungshebel 54 in einer gegen den Uhrzeigersinn verschwenkten Lage angeordnet ist, wobei der Stift 56 dann am vorderen Bereich 61 der Bohrung 58 anliegt; entsprechend ist die Sicherungsnase 55 des Sicherungshebels 54 gegen den Uhrzeigersinn nach hinten verschwenkt.

Dabei funktioniert die Sicherungsmechanik 49 folgendermaßen:

Der gemäß den Fig.5b und 6b schräg unterhalb des Sicherungshebels 54 angeordnete Hebelarm 44 wird gemeinsam mit den Drehriegeln 22, wie im Zusammenhang mit Fig.4b bereits näher erläutert, durch Betätigung des Zughebels 42 mittels des Bowdenzugs 23 bzw. des Betätigungselements 20 in die in Fig.4b angedeutete Stellung gegen den Uhrzeigersinn nach unten verschwenkt. Demgemäß kann nun die Rückenlehne 16 vorgeklappt werden, wobei der Sicherungshebel 54 gemäß Fig.6b gegen den Uhrzeigersinn verschwenkt wird und damit der in seiner unteren Stellung gemäß Fig.4b befindliche Hebelarm 44 durch die Sicherungsnase 55 gesperrt wird. Nach dem anschließenden Zurückklappen der Rückenlehne 16 wird der Tasthebel 52 durch das Auftreffen des Federstiftes 50 wieder belastet, wodurch der Sicherungshebel 54 mit der Sicherungsnase 55 im Uhrzeigersinn verschwenkt und der Hebelarm 44 wieder freigegeben wird, und wodurch er mit einer Federkraft wieder im Uhrzeigersinn nach oben verschwenkt wird. Demgemäß werden die Drehriegel 22 über den Kulissenhebel 41 (Fig.4a) wieder in die verriegelte, die Rückenlehne 16 festlegende Stellung verschwenkt.

Wird - nachdem der Hebelarm 44 gemeinsam mit den Drehriegeln 22, durch Betätigung des Zughebels 42 mittels des Bowdenzugs 23 bzw. des Betätigungselements 20 in die in Fig.4b angedeutete Stellung gegen den Uhrzeigersinn nach unten verschwenkt worden ist - die Rückenlehne 16 nicht vorgeklappt, so verbleibt der Sicherungshebel 54 gemäß den Fig.5a und 5b in seiner vorderen Stellung. Demgemäß kann der Hebelarm 44 durch die Sicherungsnase 55 nicht in seiner unteren Stellung gehalten werden und schwenkt gemeinsam mit den Drehriegeln 22 wieder zurück, sobald der Zughebel 42 (Fig.4a,b,c) nicht mehr betätigt wird. Mit anderen Worten sorgt die Sicherungsmechanik 49 in dem hier geschilderten Fall dafür, daß die Rückenlehne 16 nach dem Betätigen des Betätigungselements 20 wieder verriegelt wird, wenn die Rückenlehne 16 nicht vorgeklappt wurde. Insgesamt kann mit der Steuerungsmechanik 40 sichergestellt werden, daß die Drehriegel 22 erst unter ihrer Federbelastung verriegeln können, wenn die Rückenlehne 16 ihre zurückgeklappte Endlage erreicht hat.

Die Steuerungsmechanik 40 und die Sicherungsmechanik 49 bilden eine miteinander verbundene Einheit, die am Sitzrahmen 12 angeordnet ist. Diese Einheit ist in dem Gehäuse 60 untergebracht, das in besonders einfacher Weise am Sitzrahmen z.B. durch eine Rastverbindung aufgesteckt werden kann, wobei zudem der Kulissenarm 41 auf die Riegelachse 37 aufzustecken ist.

Gemäß den Fig. 5a und 6a ist an dem Stützbeschlag 26 ein Mikroschalter 62 befestigt, der die Verriegelungsstellung der Drehriegel 22 abtastet und mit einer Anzeige im Cockpit verbunden ist, die den Verriegelungszustand der Rückenlehne 16 veranschaulicht.

## Patentansprüche

1. Fahrzeugsitz mit einer Rückenlehne (16), die zum Erleichtern des Ein- und Ausstiegs um eine ihr gegenüber nach vorne versetzt angeordneten Schwenkachse (SR) in eine Ausweichstellung vorklappbar ist, wobei die Rückenlehne (16) in ihrer zurückgeklappten Endlage über beidseitig angeordnete Verriegelungsmittel (22) am Sitzkissenteil (14) festgelegt ist, wonach die Verriegelungsmittel (22) durch ein gemeinsames Betätigungselement (20) synchron fernentriegelbar sind, und wobei zur Schwenklagerung und zur Abstützung der Rückenlehne (16) gegenüber dem Sitzkissenteil (14) seitliche Stützbeschläge (26) vorgesehen sind, an denen im Abstand hinter der vorderen Schwenkachse (SR) ein Drehgelenk (25) für die Neigungseinstellung der Rückenlehne (16) angeordnet ist,
**dadurch gekennzeichnet,**
**daß** die Stützbeschläge (26) jeweils einen nach hinten abragenden Halteschenkel (28) aufweisen, der in einem Abstand hinter dem zugeordneten Drehgelenk (25) der Rückenlehne (16) endet, wobei das freie Schenkelende (30) des Halteschenkels (28) in der zurückgeklappten Endlage der Rückenlehne (16) am Sitzkissenteil (14) verriegelbar ist.

2. Fahrzeugsitz nach Anspruch 1,
**dadurch gekennzeichnet,**
**daß** die jeweilige Stützstelle (32) der Stützbeschläge (26) am Sitzkissenteil (14) in einem Abstand hinter dem Drehgelenk (25) für die Neigungseinstellung der Rückenlehne (16) liegt.

3. Fahrzeugsitz nach Anspruch 1,
**dadurch gekennzeichnet,**
**daß** die Verbindungslinien zwischen Schwenkachse (SR), Schenkelende(30) und Drehgelenkachse (DA) ein etwa gleichschenkliges Dreieck bilden.

4. Fahrzeugsitz nach Anspruch 1,
**dadurch gekennzeichnet,**
**daß** die Schenkelenden (30) jeweils mit einem Drehriegel (22) zusammenwirken, der am Sitzkissenteil (14) schwenkbar ge lagert ist.

5. Fahrzeugsitz nach Anspruch 4,
**dadurch gekennzeichnet,**
**daß** die Drehriegel (22) als U-förmige Bügel ausgebildet sind, die in ihrer Verriegelungsstellung das Schenkelende (30) des zugeordneten Halteschenkels (28) umgreifen.

6. Fahrzeugsitz nach Anspruch 4,
**dadurch gekennzeichnet,**
**daß** der Fahrzeugsitz ein Integralsitz mit integriertem Sicherheitsgurtsystem ist und daß der Drehriegel (22) auf der Seite des oberen Gurtverankerungspunktes (18) verstärkt ist.

7. Fahrzeugsitz nach Anspruch 4,
**dadurch gekennzeichnet,**
**daß** die Drehriegel (22) über eine Verbindungsstange (36) drehgekoppelt sind.

8. Fahrzeugsitz nach Anspruch 7,
**dadurch gekennzeichnet,**
**daß** die Drehriegel (22) in ihrer ver- und entriegelten Stellung über eine einzige Steuerungsmechanik (40) gesichert sind.

9. Fahrzeugsitz nach Anspruch 8,
**dadurch gekennzeichnet,**
**daß** die Steuerungsmechanik (40) auf die Verbindungsstange (36) wirkt.

10. Fahrzeugsitz nach Anspruch 8,
**dadurch gekennzeichnet,**
**daß** von dem auf der Seite der Steuerungsmechanik (40) liegenden Stützbeschlag (26) ein Anschlagmittel (50) absteht, von dem die Steuerungsmechanik (40) in der zurückgeklappten Stellung der Rückenlehne (16) in ihrer Auslösestellung gehalten ist.

11. Fahrzeugsitz nach Anspruch 4,
**dadurch gekennzeichnet,**
**daß** die Drehriegel (22) durch Betätigen eines Bowdenzugs (23) gegen eine Federkraft in ihre entriegelte Stellung schwenkbar sind.

12. Fahrzeugsitz nach Anspruch 1,
**dadurch gekennzeichnet,**
**daß** das Schenkelende (30) im Bereich der Riegelachse (37) eine Einbuchtung (38) aufweist.

13. Fahrzeugsitz nach Anspruch 1,
**dadurch gekennzeichnet,**
**daß** eine Anzeige des Verriegelungszustandes der Rückenlehne (16) vorgesehen ist, wobei die Verriegelungsstellung durch einen Mikroschalter (62) abgetastet ist.

## Claims

1. A vehicle seat with a seat back (16) which can be folded forward about an axis of pivoting (SR) positioned offset in front of it into an alternative position in order to facilitate entry and exit, the seat back (16) in its folded back end position being fixed to the seat cushion part (14) by locking means (22) positioned on both sides, after which the locking means (22) can be synchronously remotely unlocked by means of a common actuating element (20), and lateral supporting fittings (26) being fitted to provide the pivoting bearing and support the seat back (16) in relation to the seat cushion, there being positioned on said fittings (26) a certain distance behind the front axis of pivoting (SR) a hinge (25) for setting the inclination of the seat back (16),
**characterised in that**
the supporting fittings (26) each have a retaining leg (28) which projects to the rear and ends a certain distance behind the associated hinge (25) on the seat back (16), it being possible to lock the free leg end (30) of the retaining leg (28) in the end position in which the seat back (16) is folded down to the seat cushion part (14).

2. A vehicle seat in accordance with claim 1,
**characterised in that**
the supporting position (32) of the supporting fittings (26) on the seat cushion (14) lies a certain distance behind the hinge (25) for setting the inclination of the seat back (16).

3. A vehicle seat in accordance with claim 1,
**characterised in that**
the connecting lines between the axis of pivoting (SR), the leg ends (30) and the hinge axis (DA) form an approximately equilateral triangle.

4. A vehicle seat in accordance with claim 1,
**characterised in that**
the leg ends (30) each co-operate with a rotary fastener (22) which is mounted on the seat cushion part (14) in such a manner that it is able to pivot.

5. A vehicle seat in accordance with claim 4,
**characterised in that**
the rotary fasteners (22) are designed as U-shaped brackets which in their locked position encompass the leg ends (30) of the associated retaining leg (28).

6. A vehicle seat in accordance with claim 4,
**characterised in that**
the vehicle seat is an integral seat with integrated seat belt system and that the rotary fastener (22) is reinforced on the side of the upper belt anchoring point (18).

7. A vehicle seat in accordance with claim 4,
**characterised in that**
the rotary fasteners (22) are coupled by means of a connecting rod (36) in such a manner that they are able to rotate.

8. A vehicle seat in accordance with claim 7,
**characterised in that**
in their locked and unlocked positions the rotary fasteners (22) are secured by a single control mechanism (40).

9. A vehicle seat in accordance with claim 8,
**characterised in that**
the control mechanism (40) acts on the connecting rods (36).

10. A vehicle seat in accordance with claim 8,
**characterised in that**
projecting from the supporting fitting (26) on the side of the control mechanism (40) is a stop means (50) which holds the control mechanism (40) in its release position when the seat back (16) is in the folded back position.

11. A vehicle seat in accordance with claim 4,
**characterised in that**
the rotary fasteners (22) can be pivoted into their locked position against a spring force by actuating a Bowden cable (23).

12. A vehicle seat in accordance with claim 1,
**characterised in that**
the leg end (30) has a recessed section (38) in the area of the axis of the rotary fastener.

13. A vehicle seat in accordance with claim 1,
**characterised in that**
a display indicating the locked status of the seat back (16) is provided, the locking position being sensed by a microswitch (62).

## Revendications

1. Siège de véhicule avec un dossier (16) qui peut être rabattu dans une position d'évitement autour d'un axe de pivotement (SR) disposé de manière décalée vers l'avant par rapport à lui pour faciliter la montée et la descente, sachant que le dossier (16), dans sa position finale rabattue vers l'arrière, est fixé à la partie coussin du siège (14) par des moyens de verrouillage (22) disposés de part et d'autre, les moyens de verrouillage (22) pouvant être déverrouillés à distance de manière synchronisée grâce à un élément d'actionnement commun (20), et des ferrures de support latérales (26) sur lesquelles une articulation tournante (25) pour le réglage de l'inclinaison du dossier (16) est disposée avec un écart par rapport à l'axe de pivotement avant (SR) étant prévues en face de la partie coussin du siège (14) pour le logement en position de pivotement et pour soutenir le dossier (16), **caractérisé en ce que** les ferrures de support (26) comportent respectivement une branche de support (28) qui dépasse vers l'arrière et se termine avec un écart derrière l'articulation tournante (25) correspondante du dossier (16), l'extrémité libre de branche (30) de la branche de support (28) pouvant être verrouillée dans la position finale rabattue vers l'arrière du dossier (16) sur la partie coussin du siège (14).

2. Siège de véhicule selon la revendication 1, **caractérisé en ce que** le point d'appui respectif (32) des ferrures de support (26) sur la partie coussin du siège (14) se situe avec un écart derrière l'articulation tournante (25) pour le réglage de l'inclinaison du dossier (16).

3. Siège de véhicule selon la revendication 1, **caractérisé en ce que** les lignes de liaison entre l'axe de pivotement (SR), l'extrémité de la branche (30) et l'axe de l'articulation tournante (DA) forment un triangle à peu près isocèle.

4. Siège de véhicule selon la revendication 1, **caractérisé en ce que** les extrémités de la branche (30) agissent respectivement avec un dispositif de verrouillage rotatif (22) qui est logé sur la partie coussin du siège (14) de manière à pouvoir pivoter.

5. Siège de véhicule selon la revendication 4, **caractérisé en ce que** les dispositifs de verrouillage rotatifs (22) sont conçus sous la forme d'étriers en U qui, dans leur position de verrouillage, entourent l'extrémité de la branche (30) de la branche de support affectée (28).

6. Siège de véhicule selon la revendication 4, **caractérisé en ce que** le siège de véhicule est un siège intégral avec système de ceinture de sécurité intégré et **en ce que** le dispositif de verrouillage rotatif (22) est renforcé du côté du point d'ancrage supérieur de la ceinture (18).

7. Siège de véhicule selon la revendication 4, **caractérisé en ce que** les dispositifs de verrouillage rotatifs (22) sont couplés en rotation par le biais d'une barre de liaison (36).

8. Siège de véhicule selon la revendication 7, **caractérisé en ce que** les dispositifs de verrouillage rotatifs (22) sont bloqués par un seul mécanisme de commande (4) dans leur position verrouillée et déverrouillée.

9. Siège de véhicule selon la revendication 8, **caractérisé en ce que** le mécanisme de commande (40) agit sur la barre de liaison (36).

10. Siège de véhicule selon la revendication 8, **caractérisé en ce qu'**un moyen de butée (50) qui maintient le mécanisme de commande (40) en position rabattue vers l'arrière du dossier (16) dépasse de la ferrure de support (26) située sur le côté du mécanisme de commande (40).

11. Siège de véhicule selon la revendication 4, **caractérisé en ce que** les dispositifs de verrouillage rotatifs (22) peuvent pivoter dans leur position déverrouillée en actionnant un câble Bowden (23) contre une force de tension de ressort.

12. Siège de véhicule selon la revendication 1, **caractérisé en ce que** l'extrémité de la branche (30) dans la zone de l'axe de verrouillage (37) comporte un creux (38).

13. Siège de véhicule selon la revendication 1,
**caractérisé en ce qu'**un affichage de l'état de verrouillage du dossier (16) est prévu, la position de verrouillage étant analysée par un microrupteur (62).
